# EUROPEAN PATENT APPLICATION

(11) **EP 1 798 424 A1**
(43) Date of publication of application: **20.06.2007**
(21) Application number: 06124782.1
(22) Date of filing: 24.11.2006
(51) Int. Cl.: F16B 12/20

(54) **Joint for removably connecting furniture panels abutting co-planarily against each other, in particular for worktops of kitchen cabinets**

(30) Priority: 13.12.2005 IT PN20050036 U
(71) Applicant: Ferramenta Livenza S.r.l., 33070 Maron di Brugnera, Pordenone (IT)
(72) Inventor: Ferro, Renato, 33170 Pordenone (IT)
(74) Representative: Giugni, Valter

(57) **Abstract**

Joint for removably connecting panels abutting coplanarily against each other, in particular for worktops of kitchen cabinets, comprising an accommodation case (2) that is capable of being associated to a receptacle (3) provided in a first panel (4) and adapted to engage a fastening member (5), said fastening member (5) being adapted to engage a matching case (6) that is in turn capable of being associated to a receptacle (7) provided in a second panel (8), and further comprising actuator means provided in the accommodation case (2) and adapted to cooperate with said fastening member (5) so as to firmly tighten and secure said panels (4, 8) against each other, wherein the fastening member (5) comprises a threaded portion (9), which is joined to said actuator means inside the accommodation case (2), and a coupling head (10), and wherein the accommodation case (2) further defines guide means adapted to slidably engage the receptacle (7) in the second panel (8) to cause the coupling head (10) protruding from said guide means to couple with the matching case (6).

## Description

The present invention relates to a joint for removably connecting panels abutting coplanarily against each other, in particular for worktops of kitchen cabinets.

Worktops of fitted-kitchen cabinets are widely known in the art to be generally completed by having them covered with a sequence of panels that are joined to each other by means of joints provided in the lower portion of the same panels, so as to enable these panels to ultimately form a unitary worktop.

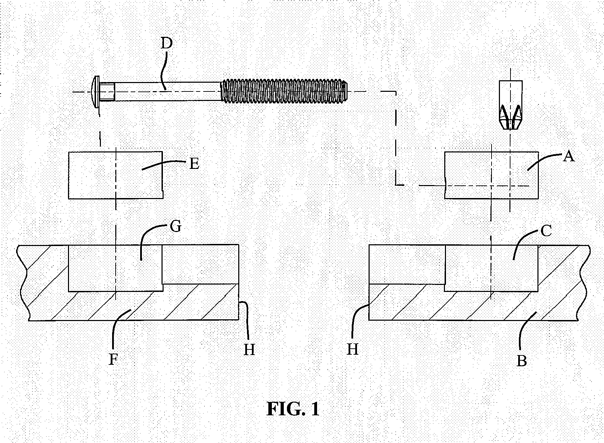

Known in the art are joints of the kind shown in Figure 1, which are comprised of a receiving or accommodation case A adapted to be associated to a first panel B at an appropriate seat or receptacle C provided into the core portion of said first panel B, a threaded pin D, and a matching member E adapted to be associated to a second panel F at an appropriate seat or receptacle G provided into the core portion of said second panel F.

The threaded pin D is adapted to be coupled by screwing to a threaded sleeve or bush provided inside the accommodation case A and accessible from outside through an appropriate bore.

The threaded pin D is further adapted to engage the matching member E by means of a head featuring an increased diameter, i.e. being enlarged in its cross-section.

Inside the accommodation case A there are provided gear means engaging a toothed portion of said sleeve, or bush, to cause the latter to rotate so as to enable the threaded pin D to be screwed thereinto and, as a result, the two panels to be joined to each other along respective abutment edges H.

The joint of the above-described kind has however a drawback in that it makes it particularly difficult for the two panels B, F to be connected to each other. In fact, the related assembly procedure calls for the threaded pin D to be in the first place screwed into the accommodation case A and the two panels to be subsequently moved close to each other, so as to be able to let the head of the threaded pin D be coupled to the matching member E. With the aid of a tool, the gear means are then operated to cause the bush to rotate and the threaded pin D tightening the abutment edges H of the two panels against each other to be screwed in.

The entire procedure needed to join the panels to each other turns therefore out as being rather complicated and laborious.

Since quite long a time is required for such a connection procedure to be completed, the same procedure turns also out as being rather unpractical to be carried out even from an economic point of view.

A further drawback connected with the above-described kind of joint derives from the fact that it does not enable the panels to be properly and effectively aligned with each other prior to the gear means being operated and the threaded pin D screwed tightly in. In this preliminary assembly step, in fact, the panels to be joined are able to slide relative to each other along the respective abutment edges, so that the need arises, actually, for the panels to be manually kept aligned with each other to have the respective abutment edges fitting properly together in view of being able to let the head of the threaded pin D be properly coupled to the matching member E.

It is therefore an object of the present invention to provide a joint for removably connecting panels abutting coplanarily against each other, in particular for worktops of kitchen cabinets, which is effective in doing away with the drawbacks and disadvantages of the afore-cited prior-art joints of the same kind.

Within this general object, it is a purpose of the present invention is to provide a joint of the above-indicated kind, which is simple from both a functional and a structural point of view.

Another purpose yet of the present invention is to provide a joint of the above-noted kind, which allows for an improved connection of the panels to each other, while ensuring a highest possible extent of safety and reliability.

A further purpose of the present invention is to provide a joint of the above-indicated kind, which is simple in construction and capable of being manufactured at fully competitive costs.

According to the present invention, these aims, along with further ones that will become apparent from the following disclosure, are reached in a joint incorporating the features as defined and recited in the claims appended hereto.

Features and advantages of the present invention will anyway be more readily understood from the description that is given below by way of nonlimiting example with reference to the accompanying drawings, in which:
- Figure 1 is a perspective exploded view of a joint according to the prior art;

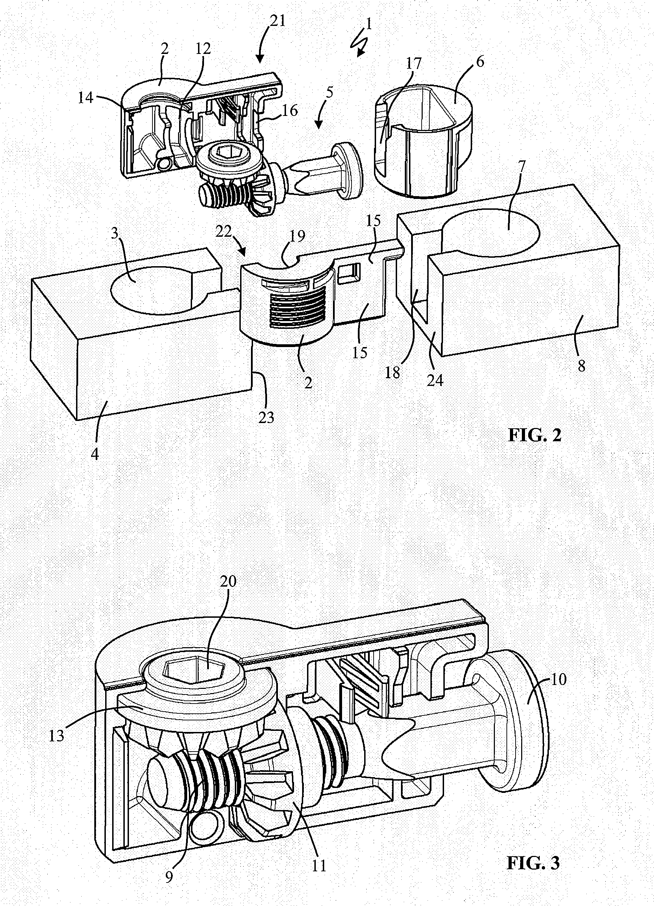

- Figure 2 is a perspective exploded view of a joint according to the present invention;
- Figure 3 is a perspective view of the joint according to the present invention, as viewed with a half-shell thereof removed;

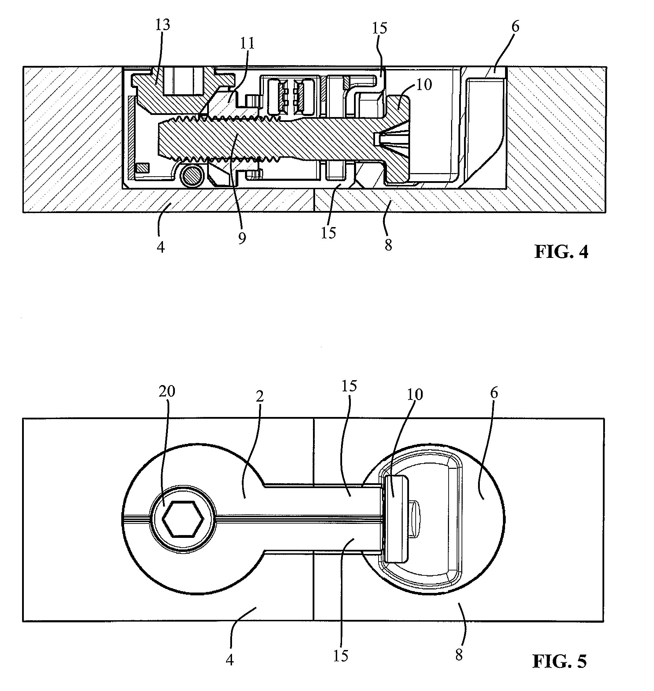

- Figure 4 is a side cross-sectional view of the joint according to the present invention;
- Figure 5 is a bottom view of the joint shown in Figure 3;
- Figure 6 is a perspective view of the joint according to a further embodiment of the present invention, as viewed with a half-shell thereof removed;
- Figure 7 is a side cross-sectional view of the joint shown in figure 6.

With reference to the above-cited Figures, the joint according to the present invention, which is indicated generally at 1 there, comprises an accommodation case 2 that is capable of being associated to a seat or receptacle 3 provided in a first panel 4 and adapted to engage a fastening member 5, which is in turn adapted to engage a matching or retaining member 6 associable to a seat or receptacle 7 provided in a second panel 8.

Actuator means are provided in the accommodation case 2 and adapted to cooperate with said fastening member 5 so as to tighten and secure said panels 4, 8 firmly against each other.

The fastening member 5 comprises a threaded portion 9, which is joined to said actuator means inside the accommodation case 2, and a coupling head 10.

The accommodation case 2 further defines guide means adapted to slidably engage the receptacle 7 in the second panel 8 to cause the coupling head 10 protruding from said guide means to couple with the matching case 6.

The actuator means comprise a first crown or ring gear 11 adapted to rotate inside a first annular seat 12 defined in the accommodation case 2.

Such first crown gear 11 is provided with a central threaded pattern meshing with the threaded portion 9 of the fastening member 5 so that said portion is able to slide axially relative thereto.

The actuator means further comprise a second crown or ring gear 13 adapted to rotate inside a second annular seat 14 defined in the accommodation case 2. Such two crown gears 11, 13 are so coupled with each other as to form a gear pair, or gear drive, so that the second crown gear 13 - as operated by means of a tool - is able to cause the first crown gear 11 to rotate, which in turn - by acting on the threaded portion 9 - causes the fastening member 5 to move and displace axially.

The guide means are provided integrally with the accommodation case 2.

In particular, the guide means are defined by a front region 15 of the accommodation case 2, which is intended for protruding from the receptacle 3 of the first panel 4 when the accommodation case 2 is inserted in position inside said receptacle 3.

Therefore, such front region 15 of the accommodation case 2 protrudes from the first panel 4 and, in particular, it protrudes from an abutment edge 23 of the first panel 4, which is adapted to be brought into abutting against a corresponding abutment edge 24 of the second panel 8 so as to cause the two panels 4, 8 to be removably connected to each other.

Furthermore, such front region 15 is adapted to slidably engage the receptacle 7 in the second panel 8, so as to allow for a quick and accurate coupling of the coupling head 10 with the matching case 6.

The coupling head 10 of the fastening member 5 protrudes from a proper aperture 16 provided in the front region 15 so as to be able to couple with a retaining edge 17 defined by the matching case 6.

The front region 15 is in turn adapted to engage and slide along a groove 18 in the receptacle 7 of the second panel 8 so as to guide the coupling head 10 along the retaining edge 17 of the matching case 6.

Therefore, the front region 15 is adapted to extend into the receptacle 7 of the second panel 8 when the two panels 4, 8 are abutting against each other along the respective abutment edges 23, 24, so as to ensure a firm connection between the panels 4, 8 and prevent the same panels from being able to slide relative to each other.

Advantageously, the second crown gear 13 is accessible through a proper bore 19 provided in the accommodation case 2 so as to be able to be rotated by means of a tool. The second crown gear 13 is in fact provided with a centrally extending through-bore 20, which is in the shape of a hexagon in its cross-section in the particular embodiment being discussed, and which is adapted to be engaged by a corresponding Allen wrench.

The two crown gears 11, 13 are preferably arranged on planes extending orthogonally relative to each other and, in an advantageous manner, the fastening member 5 is adapted to slide axially in a direction that is perpendicular to the plane in which the first crown gear 11 is adapted to rotate.

In a highly preferred embodiment of the present invention, the accommodation case 2 is comprised of a first half-shell 21 and a second half-shell 22, which are substantially complementary and associable to each other so as to define the front region 15, the aperture 16 and the bore 19, further to the other elements of the accommodation case 2, i.e. the first annular seat 12 and the second annular seat 14.

Proper dowel-pins, or centering pegs, and corresponding receptacles are provided on the two half-shells 21, 22 to enable them to be correctly associated to each other.

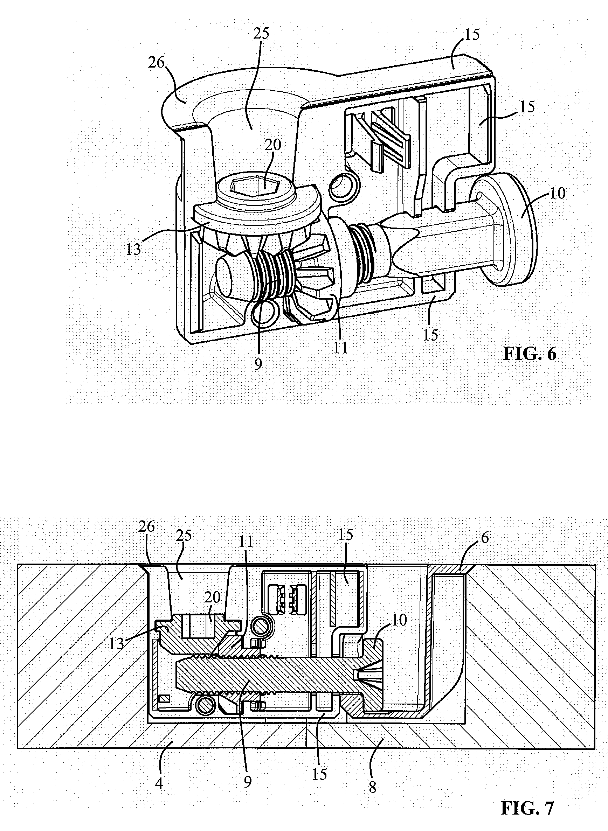

In a second embodiment of the present invention, which is illustrated in Figures 6 and 7, the accommodation case 2 defines a cavity 25, through which the second crown gear 13 is accessible to be rotated by means of a tool.

In correspondence to the aperture of this cavity 25, the accommodation case 2 further defines an annular edge 26 that extends radially relative to the same cavity 25 and is adapted to engage a surface of the first panel 4, so as to conceal the receptacle 3 in the first panel 4 from view, i.e. from the sight of a user.

The way in which the inventive joint works is as follows:

The panels 4, 8 are moved near each other until the respective abutment edges 23, 24 practically come to rest against each other; then, the front region 15 is inserted through the groove 18 provided in the receptacle 7, so as to guide the coupling head 10 up to the retaining edge 17.

When the front region 15 and the coupling head 10 come to abut against the bottom of the groove 18 and a lower portion of the retaining edge 17, respectively, the second crown gear 13 is operated.

The second crown gear 13 thus drives the first crown gear 11 rotatably, which, by in turn acting on the threaded portion 9 of the fastening member 5, enables the coupling head 10 to move axially, thereby tightening and securing the two panels 4, 8 against each other.

Fully apparent from the above description is therefore the ability of the present invention to effectively reach the aims and advantages specified hereinbefore, by providing a joint that is particularly simple in both its construction and operation and further enables the panels to be firmly and tightly connected to each other in a very simple and quick manner.

The inventive joint enables the panels to be aligned without any sliding displacement relative to each other along the respective abutment edges, and the coupling head to be at the same time duly coupled to the corresponding retaining body.

It shall be appreciated that the inventive joint, as described above, is subject to a number of modifications and may be embodied in a number of different manners without departing from the scope of the present invention as defined in the appended claims.

It will finally be appreciated the materials used in connection with the present invention, as well as the sizing and the shapes of the various component parts, may each time be selected so as to more appropriately meet the particular requirements or suit the particular application.

## Claims

1. Joint for removably connecting panels abutting coplanarily against each other, in particular for worktops of kitchen cabinets, comprising
- an accommodation case (2) that is capable of being associated to a receptacle (3) provided in a first panel (4) and adapted to engage a fastening member (5), said fastening member (5) being adapted to engage a matching case (6) that is in turn capable of being associated to a receptacle (7) provided in a second panel (8),
- actuator means provided in said accommodation case (2) and adapted to cooperate with said fastening member (5) so as to firmly tighten and secure said panels (4, 8) against each other, **characterized in that** said fastening member (5) comprises a threaded portion (9), which is joined to said actuator means inside the accommodation case (2), and a coupling head (10), wherein the accommodation case (2) defines guide means adapted to slidably engage the receptacle (7) in the second panel (8) to cause the coupling head (10) protruding from said guide means to couple with the matching case (6).

2. Joint according to claim 1, **characterized in that** said guide means are provided integrally with the accommodation case (2).

3. Joint according to claim 2, **characterized in that** said guide means comprise a front region (15) defined by said accommodation case (2) and adapted to protrude from an abutment edge (23) of the first panel (4), said abutment edge (23) being adapted to be brought into abutting against a corresponding abutment edge (24) of the second panel (8) so as to cause the two panels (4, 8) to be removably connected to each other.

4. Joint according to claim 3, **characterized in that** said front region (15) comprises an aperture (16) for the coupling head (10) of the fastening member (5) to protrude therefrom.

5. Joint according to claim 4, **characterized in that** said front region (15) is adapted to extend into the receptacle (7) of the second panel (8) when the panels (4, 8) are abutting against each other along the respective abutment edges (23, 24).

6. Joint according to claim 5, **characterized in that** said front region (15) is adapted to slidably engage the receptacle (7) in the second panel (8), so as to guide the coupling head (10) into coupling with the matching case (6).

7. Joint according to claim 1, **characterized in that** said actuator means comprise a first crown gear (11) and a second crown gear (13) that are so coupled with each other as to form a gear pair, or gear drive, so that the second crown gear (13), as operated by means of a tool, is able to drive the first crown gear (11) into rotating.

8. Joint according to claim 7, **characterized in that** said first crown gear (11) is provided with a central threaded pattern meshing with the threaded portion (9) of the fastening member (5) so that said portion is able to slide axially relative thereto.

9. Joint according to claim 8, **characterized in that** said accommodation case (2) defines a cavity (25), through which said second crown gear (13) is accessible to be rotated by means of a tool.

10. Joint according to any of the preceding claims, **characterized in that** said accommodation case (2) is comprised of a first half-shell (21) and a second half-shell (22), which are substantially complementary and associable to each other so as to define the front region (15), the aperture (16) and the bore (19) or cavity (25).
